# EUROPÄISCHE PATENTANMELDUNG

(11) **EP 0 579 127 A1**
(43) Veröffentlichungstag der Anmeldung: **19.01.1994**
(21) Anmeldenummer: 93110984.7
(22) Anmeldetag: 09.07.1993
(51) Int. Cl.: F16L 37/14

(54) **Automatisch montierbare Steckkupplung für Leitungsschläuche in Kraftfahrzeugen**

(30) Priorität: 15.07.1992 DE 4223250
(71) Anmelder: Continental Aktiengesellschaft, D-30165 Hannover (DE)
(72) Erfinder: Keuper, Dieter, Dr., D-37589 Kalefeld (DE); Haberjan, Horst, D-29664 Walsrode (DE)

(57) **Zusammenfassung**

Die Erfindung bezieht sich auf eine automatisch montierbare Steckkupplung für Leitungsschläuche in Kraftfahrzeugen zum lösbaren verbinden eines Rohrstutzens und eines Schlauchnippels. Um die Steckkupplung bei bereits eingesetztem Riegelelement (10) montieren zu können, wird vorgeschlagen, daß der Schlauchnippel (3) an seinem freien Ende vor dem Dichtring (6) einen konischen Bereich (13) aufweist, der in radialer Höhe den größten Teil des Dichtringquerschnitts abdeckt und der bei der Montage der Steckkupplung im Falle einer vormontierten Klammer diese nach außen drückt.

## Beschreibung

Die Erfindung betrifft eine automatisch montierbare Steckkupplung für Leitungsschläuche in Kraftfahrzeugen gemäß dem Oberbegriff von Patentanspruch 1.

Eine solche Steckkupplung ist aus der EP 0 444 304 A1 bekannt. Diese vorbekannte Steckkupplung zeichnet sich bereits durch eine unkomplizierte und damit problemlose Herstellbarkeit sowie eine einfache - auch manuelle - Handhabung bei der Montage und ebenfalls bei einer evtl. späteren Demontage und wiederholten Montage sowie durch eine hohe Betriebssicherheit aus. Bei der bekannten Steckkupplung ist es jedoch erforderlich, das Riegelelement separat zu handhaben, d.h. der Rohrstutzen und der Schlauchnippel müssen bei entferntem Riegelelement zusammengeführt werden und erst danach kann das Riegelelement zur dauerhaften Fixierung der Steckverbindung eingeschoben werden.

Der Erfindung liegt die Aufgabe zugrunde, die eingangs genannte Steckverbindung dahingehend zu verbessern, daß eine Montage bei bereits eingesetztem Riegelelement durchführbar ist.

Diese Aufgabe wird erfindungsgemäß dadurch gelöst, daß der Schlauchnippel an seinem freien Ende vor dem Dichtring einen konischen Bereich aufweist, der in radialer Höhe den größten Teil des Dichtringquerschnitts abdeckt und der bei der Montage der Steckkupplung im Falle einer vormontierten Klammer diese nach außen drückt.

Die Erfindung bietet den Vorteil, daß bei der Montage der Steckverbindung das Riegelelement bereits verliersicher am Rohrstutzen angebracht ist. Dies erfolgt über eine Vormontage, so daß in dem beengten Einbauraum in einem Kfz für eine Montage der Steckkupplung lediglich noch der Schlauchnippel in den Rohrstutzen hineingeschoben werden muß. Dies kann auf einfache Weise von Hand geschehen.

Nach einer bevorzugten Ausführungsform besteht das Riegelelement in Form einer U-förmigen biegeelastischen Klammer aus Runddraht, so daß beim Vorbeischieben des Dichtrings an der Klammer keine Beschädigungen des Dichtrings zu befürchten sind. Nach einer weiteren bevorzugten Ausführungsform ist die Klammer auch in axialer Richtung der Schlauchkupplung vorgebogen, so daß sie eine Federwirkung in dieser Richtung ausübt. Nach einer weiteren Ausbildung der Erfindung ist eine Verdrehsicherung zwischen Rohrstutzen und Schlauchnippel vorgesehen.

Nachfolgend wird ein Ausführungsbeispiel der Erfindung anhand einer Zeichnung näher erläutert. Es zeigt
- Fig. 1: einen Längsschnitt durch eine erfindungsgemäße Steckkupplung (Schnitt I-I in Fig. 3),
- Fig. 2: einen Längsschnitt durch dieselbe Steckkupplung in einer zur Darstellung gemäß Fig. 1 um 90° um die Längsachse gedrehten Ebene (Schnitt II-II in Fig. 3),
- Fig. 3: einen Querschnitt durch eine solche Schlauchkupplung (Schnitt III-III in Fig. 1),
- Fig. 4: einen Querschnitt gemäß Fig. 3 jedoch mit einer anders gestalteten Klammer,
- Fig. 5: eine Klammer, die in Axialrichtung der Steckkupplung vorgebogen ist,
- Fig. 6: eine Verdrehsicherung in Form eines Einschnitts und einer Nase,
- Fig. 7: eine Verdrehsicherung in Form von zwei zahnkranzartigen Ausbildungen,
- Fig. 8: einen vergrößerten Ausschnitt gemäß Fig. 7.

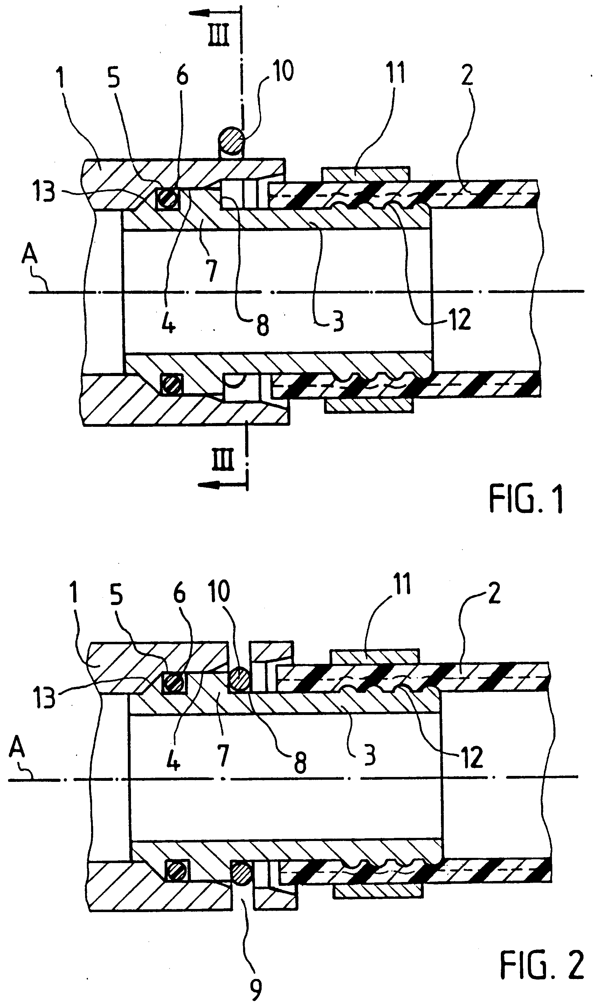

Die in den Fig. 1 bis 3 dargestellte erfindungsgemäße Steckkupplung weist einen Rohrstutzen 1 auf, mit dem ein Schlauch 2 über einen an ihm befestigten Rohrnippel 3 dichtend verbunden ist. Ein zwischen der Wandungsaußenfläche 4 des Schlauchnippels 3 und der Wandungsinnenfläche 5 des Rohrstutzens 2 unter radialer Kompression eingesetzter Dichtring 6 - vorzugsweise ein O-Ring - sorgt für eine sichere Abdichtung zwischen dem Rohrstutzen 1 und dem Schlauchnippel 3. Zwischen dem Dichtring 6 und dem auf dem Schlauchnippel 3 aufgeschobenen Schlauchende ist an den Schlauchnippel 3 ein Anschlagflansch 7 angeformt, dessen dem freien Ende des Schlauchnippels 3 abgewandte Flanke 8 radial verläuft und als Anschlagfläche für das quer zur Kupplungslängsachse A in die schlitzförmigen Wandungsöffnungen 9 des Rohrstutzens 1 eingeschobene Riegelelement 10 dient. Hierdurch ist der Schlauchnippel 3 mit dem an ihm befestigten Schlauch 2 sicher am Rohrstutzen 1 fixiert. Andererseits kann er jederzeit durch einfaches Herausziehen des Riegelelements 5 wieder vom Rohrstutzen 1 gelöst werden. Zur sicheren dichtenden Fixierung des Schlauches 2 am Schlauchnippel 3 dient ein Spannring 11 - vorzugsweise ein geschlossener Metallring gemäß DE-GM 88 11 459 -, der die Schlauchwandung radial gegen die mit umlaufenden Halterippen 12 versehene Nippelwandung preßt.

An seinem freien Ende weist der Schlauchnippel 3 einen konischen Bereich 13 auf, der gleichzeitig als Wandbegrenzung für eine Nut dient, in der sich der Dichtring 6 befindet. Der konische Bereich 13 erstreckt sich in radialer Richtung so weit, daß er den größten Teil des Dichtringquerschnitts abdeckt.

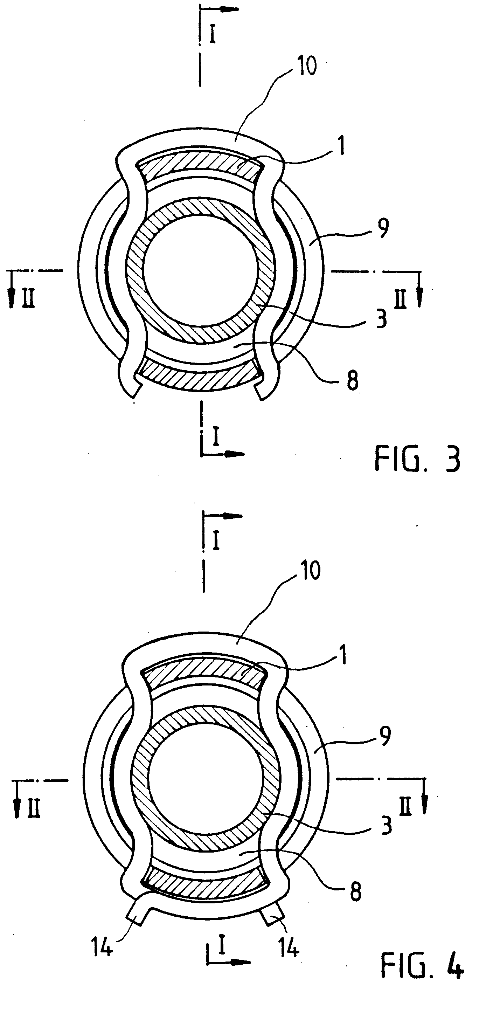

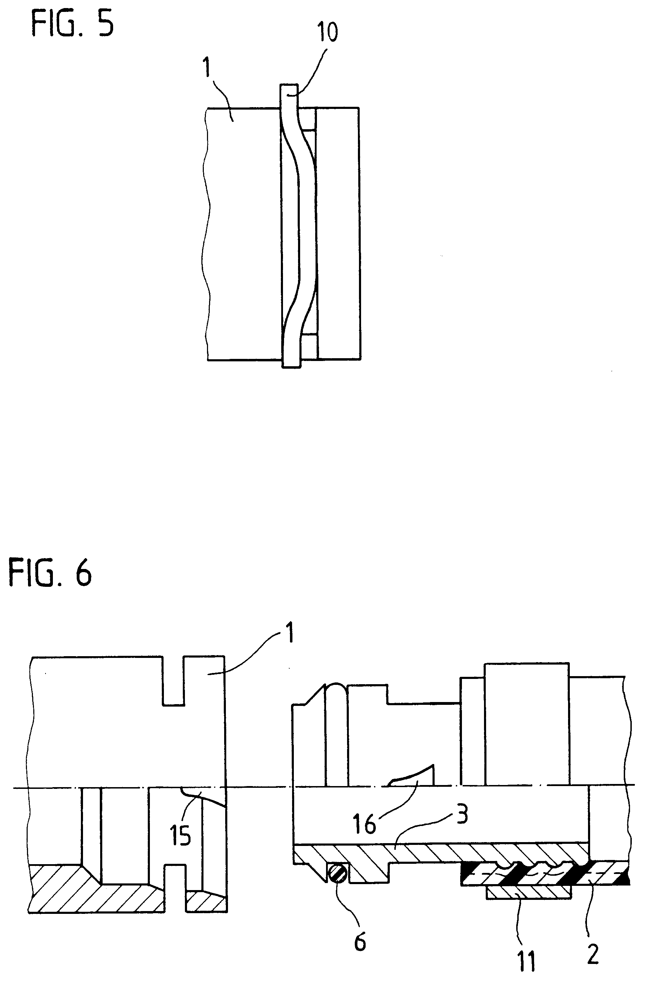

In Fig. 3 ist ein Riegelelement 10 in Form einer U-förmigen elastischen Klammer dargestellt. Eine andere Variante eines Riegelelements 10 entnimmt man der Fig. 4. Dort werden die Endschenkel 14 mittels eines Spezialwerkzeugs zusammengedrückt, um die Klammer wieder aus der Steckkupplung entfernen zu können.

Zur Montage der Steckkupplung wird zunächst das Riegelelement 10 in die Wandungsöffnungen 9 des Rohrstutzens 1 eingeführt. Danach wird in axialer Richtung der Schlauchnippel 3 mit dem Schlauch 2 in den Rohrstutzen 1 eingeführt, wobei der konische Bereich 13 die Schenkel des Riegelelements 10 auseinanderdrückt. Nach Erreichen der Betriebsposition springen die Schenkel des Riegelelements 10 wieder nach innen und stützen sich an der Flanke des Anschlagflansches 7 ab, wodurch ein funktionssicherer Sitz gewährleistet wird. Dadurch, daß das Riegelelement aus Runddraht gefertigt ist, erzielt man zunächst eine erleichterte Montage und reduziert außerdem die Verletzungsgefahr für den O-Ring beim Überschieben der Feder. Die Demontage Steckkupplung kann nicht zufällig erfolgen; vielmehr ist dafür die Verwendung eines speziellen Werkzeugs zum Lösen des Riegelelements erforderlich. Nach dem Lösen des Riegelelements ist dann aber das Lösen der Kupplung problemlos.

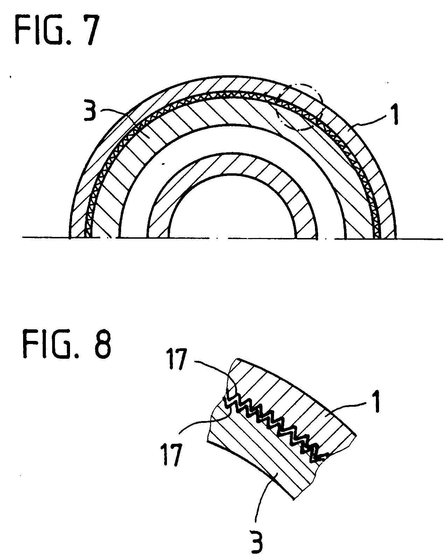

Fig. 7 zeigt schematisch ein Riegelelement 10, das in Axialrichtung der Steckkupplung vorgebogen ist. Beim Einschieben dieses Riegelelements 10 wird in axialer Richtung der Steckkupplung eine Vorspannung erzeugt, so daß sich eine selbsttätig nachspannende Steckkupplung ergibt.

In Fig. 6 ist eine Verdrehsicherung für die Steckkupplung dargestellt. Sie besteht im wesentlichen aus einem in Axialrichtung verlaufenden Einschnitt 15 in dem Rohrstutzen 1 und einer entsprechenden Nase 16 am Schlauchnippel 3. In dem vorliegend dargestellten Beispiel sind Einschnitt 15 und Nase 16 konisch ausgebildet, so daß auch bei einem geringfügig verdrehten Schlauchnippel 3 bei der Montage schließlich die exakte Zuordnung von Rohrstutzen 1 und Schlauchnippel 3 gewährleistet wird.

In Fig. 7 und 8 ist eine andere Art der Verdrehsicherung dargestellt. An dem Rohrstutzen 1 und an dem Schlauchnippel 3 befindet sich je ein Zahnkranz 17, wobei bei montierter Steckkupplung die Zähne der beiden Zahnkränze 17 ineinandergreifen und damit ein Verdrehen von Rohrstutzen 1 und Schlauchnippel 3 in Umfangsrichtung verhindern.

## Patentansprüche

1. Automatisch montierbare Steckkupplung für Leitungsschläuche in Kraftfahrzeugen zum lösbaren Verbinden eines Schlauches mit einem Rohrstutzen, die einen dichtend fest mit dem Schlauch verbundenen und mit seinem freien Ende in den Rohrstutzen einsteckbaren und ohne jegliche Drehbewegung dichtend an diesem fixierbaren Schlauchnippel aufweist, wobei das freie Ende des Schlauchnippels an seiner Wandungsaußenfläche einen Dichtring trägt, der beim Einführen des Schlauchnippels in dem Rohrstutzen den Ringspalt zwischen dessen Wandungsinnenfläche und der Wandungsaußenfläche des Schlauchnippels unter radialer Kompression radial ausfüllt und abdichtet, wobei der in den Rohrstutzen eingesteckte Schlauchnippel mittels eines im Bereich des freien Endes des Rohrstutzens in zwei seine Wandung quer zu seiner Längschachse tangential zur Wandungsaußenfläche des Schlauchnippels durchdringende Öffnungen einsteckbaren Riegelelements in Form einer U-förmigen biegeelastischen Klammer axial fixierbar ist, das sich gegen eine am Schlauchnippel angebrachte, dessen freiem Ende abgewandte radiale Flanke axial abstützt, **dadurch gekennzeichnet,** daß der Schlauchnippel (3) an seinem freien Ende vor dem Dichtring (6) einen konischen Bereich (13) aufweist, der in radialer Höhe den größten Teil des Dichtringquerschnitts abdeckt und der bei der Montage der Steckkupplung im Falle einer vormontierten Klammer (10) diese nach außen drückt.

2. Steckkupplung nach Anspruch 1, dadurch gekennzeichnet, daß die Klammer (10) aus einem Runddraht besteht.

3. Steckkupplung nach Anspruch 1, dadurch gekennzeichnet, daß die Klammer (10) auch in Axialrichtung der Steckkupplung eine Federwirkung ausübt.

4. Steckkupplung nach Anspruch 1, dadurch gekennzeichnet, daß der Rohrstutzen (1) an seinem freien Ende einen in Axialrichtung verlaufenden Einschnitt (15) aufweist, in den eine Nase (16) des Schlauchnippel (3) eingreift.

5. Steckkupplung nach Anspruch 4, dadurch gekennzeichnet, daß Einschnitt (15) und Nase (16) konisch verlaufen.

6. Steckkupplung nach Anspruch 1, dadurch gekennzeichnet, daß als Verdrehsicherung am Rohrstutzen (1) und am Schlauchnippel (3) je ein Zahnkranz (17) vorhanden sind, deren Zähne bei montierter Steckkupplung ineinandergreifen.
